# EUROPEAN PATENT APPLICATION

(11) **EP 2 264 968 A1**
(43) Date of publication of application: **22.12.2010**
(21) Application number: 09305552.3
(22) Date of filing: 16.06.2009
(51) Int. Cl.: H04L 29/06

(54) **Method and apparatus for UPnP device access control**

(71) Applicant: Thomson Licensing, 92130 Issy-les-Moulineaux (FR)
(72) Inventor: van den Poel, Dirk, 92648 Boulogne Cedex (FR); Fan, Wei, 92648 Boulogne Cedex (FR); Wang, Bin, 92648 Boulogne Cedex (FR); Zhang, Guo Yuan, 92648 Boulogne Cedex (FR)
(74) Representative: Berthier, Karine

(57) **Abstract**

A method and apparatus for UPnP device access control is provided. For a UPnP device which provides a number of other UPnP devices, services and actions, there is a hierarchical XML configuration file describing the right to access the provided UPnP devices, services, and actions. In this hierarchical XML file, the access right of a parent element will be inherited by children elements when the access right of the children elements are not written in the XML configuration file.

## Description

### FIELD OF THE INVENTION

The present invention relates to access control, and more particularly to a method and apparatus for UPnP device access control.

### BACKGROUND OF THE INVENTION

In a UPnP (Universal Plug and Play) home network, there are usually UPnP devices (e.g. home gateways, usually serving as servers) and control points (CPs) (e.g. personal computers, usually serving as clients). The UPnP devices offer services and may contain further devices with additional services. The control points make use of the services provided by the UPnP devices and control the UPnP devices with defined actions that change the state of the UPnP devices and control the offered services. For example, in a UPnP network, a UPnP web camera offers a monitoring service to the computers that act as control points.

Normally there are mainly 3 steps of information exchange between a CP and a UPnP device: Discovery, Description, and Control. By Discovery step, a control point can find devices that are of interest to it. For example, a control point broadcasts search packets to look for devices and/or services of a specific type. Then devices whose type matches the specific type will respond to the broadcasted search packets. At the step of Description, discovery packets sent out by the devices refer the control point to a location where it can retrieve a Device Description Document (DDD). For a device, this DDD mainly contains: a summary of the device's embedded devices and a list of services, and a URL for Service Control Protocol Definition (SCPD which describes how the control point can make use of the services offered by the device. During the Control step, by using the DDD and SCPD information, it is allowed that the control point sends commands to the device to control it. But for the consideration of security, some UPnP contents should not be presented to the control point or should be secured. This asks for the function of access control of UPnP security.

Now, UPnP forum has a specific standard for UPnP security, http://www.upnp.org/standardizeddcps/documents/devicesecurity 1.0cc 001. pdf, *DeviceSecurity: 1 Service Template (For UPnP™ Device Architecture 1.0)* which has function of access control. In its schema, ACL (Access Control List) is applied to limit the access from CPs. That ACL is a collection of entries. Each ACL entry is communicated as an XML element of the form, e.g.

```
  <entry>
     <subject> {<hash>, <name> or <any/>} </subject>
     <may-not-delegate/>
     <access> {mfgr def'd permission elements or <all/>} </access>
     <valid> {optional <not-before> and/or <not-after> elements} </valid>
  </entry>
  <entry>
     <subject> {<hash>, <name> or <any/>} </subject>
     <may-not-delegate/>
     <access> {mfgr def'd permission elements or <all/>} </access>
     <valid> {optional <not-before> and/or <not-after> elements} </valid>
  </entry>
```

Detailed definition and usability of the tags in above format can be referred to that standard. According to the specification, entries in that ACL can be added or deleted by SC (Security Console - an authorized CP to configure device's security, defined in UPnP security standard).

But above mentioned traditional access control mechanism is complicated and not easy to implement. To apply that access control function, a device firstly needs to implement the framework of UPnP Security standard, at least some services/actions and SC to control ACL. In addition, ACL entry's <access> definition and usability is not so feasible and is hard to use. Element <access> is used to indicate what elements can be accessed in that device, and its definition can not be easily mapped to the DDD and SCPD structure in the device.

### SUMMARY OF THE INVENTION

In an aspect, an apparatus having at least one first element which is related to at least one second element in a network is provided. The apparatus comprises: a first storage means for storing a descriptor with a first value describing an attribute of the at least one first element, the descriptor with the first value being inherited by the relating at least one second element if there is not an explicitly resetted second value of the descriptor for the at least one second element, otherwise storing the explicitly resetted second value of the descriptor for the at least one second element, and a processor for providing the first and the second values of the descriptor respectively for the first element and the second element to a control device so that the control device accesses the apparatus according to the first and the second values of the descriptor.

In detail, the descriptor and its corresponding first and second values for the first element and the second element are written and stored as an Extension Markup Language file in the first storage means.

Further, the first element is the parent element of the second element.

In addition, the descriptor describes the access right of the at least one first element and second element by the control device.

As in a detailed embodiment, the apparatus is a universal plug and play home gateway device.

In a detailed embodiment, there is a second storage for storing the descriptor and its corresponding first and second values which are reconstructed to a Device Description Document before they are provided to the control device.

In another aspect, a method for parsing a configuration file is provided. The method comprises steps of reading a first value of a descriptor for a first element ; and reading a second value of the descriptor for a second element, if the second value of the descriptor for the second element is written in the configuration file, otherwise, reading the first value of the descriptor as the value of the descriptor for the second element.

In a detailed emebodiment, the configuration file is constructed as an Extension Markup Language file.

Further, in the Extension Markup Language file, the first element is the parent element of the second element.

In a more detailed embodiment, the first element is a UPnP device, and the second element is a UPnP device, service, or action it provides.

In above method, the descriptor describes the access right of the at least one first element and the second element.

### BRIEF DESCRIPTION OF THE DRAWINGS

Fig.1 is a block diagram illustrating a UPnP system using current inventive UPnP device access control method;
Fig.2 is a diagram illustrating how the current inventive UPnP device access control configuration file is used;
Fig.3 is a main flow chart illustrating partly how the UPnP device access control configuration file is parsed;
Fig.4 is a flow chart illustrating the process how the UPnP device access control configuration file is parsed when an element is a device; and
Fig.5 is a flow chart illustrating the process how the UPnP device access control configuration file is parsed when an element is a service;

### DETAILED DESCRIPTION OF THE EMBODIMENTS

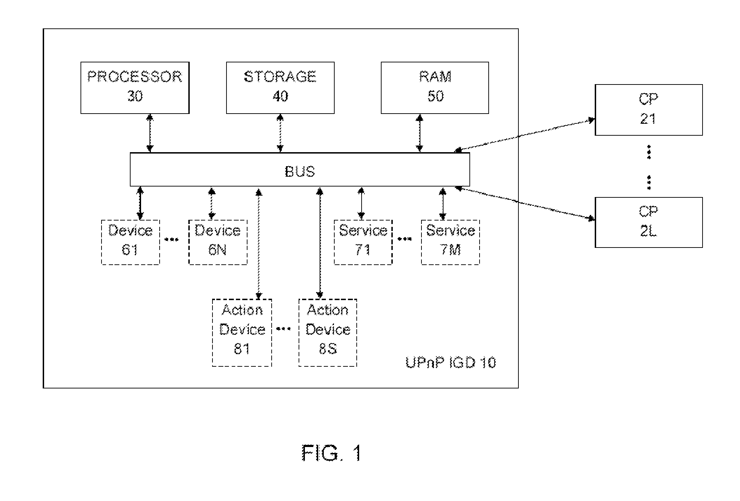

Fig.1 shows a block diagram of a UPnP system using current UPnP device access control method. The system mainly includes two parts: a UPnP Internet Gateway Device (IGD) 10 and multiple control points (CPs) with signs 21 to 2L. The UpnP IGD 10 is a virtual device defined in UpnP conception frame and it is fulfilled as embedded in for example a personal computer. Also, UPnP services are virtual conception. In the UPnP IGD 10, there is a processor 30, a storage 40, a Random Access Memory (RAM) 50, a number of UPnP devices 61∼6N, plurality of UPnP services 71∼7M, and actions 81∼8S. Though the UPnP devices 61∼6N, services 71∼7M, and actions 81∼8S in Fig.1 are drawn separately, actually, they have affiliation relations. For example, some services may be configured for a device and some actions are for a service. In addition, a device may host other devices.

UPnP contents (devices 61∼6N, services 71∼7M, and actions 81∼8S) sometimes need to be limited for or be protected from the access by some CPs, 21∼2L, such as one type of CPs. Access to those protected contents may need authentication, or even some of those contents are masked to some CPs at all. To achieve above control of access by CPs, a Mask and Security( M&S ) configuration file is constructed and stored in the storage 40. This M&S configuration file specifies the accessibility of the UPnP contents provided by the UPnP IGD 10.

Here is an exemplary XML structured Mask and Security (M&S) configuration file

```
   <root>
     <Device Mask=True Security=False>
       <DeviceType>SampleDeviceType1 </DeviceType>
       <ServiceList>
         <Service Mask=False Security=True>
           <ServiceType>SampleServiceType1</ServiceType>
           <ServiceID>SampleServicelD1</Servicel D>
         </Service>
       </ServiceList>
       <DeviceList>
         <Device Mask=False>
           <DeviceType>SampleDeviceType2<DeviceType>
           <ServiceList>
             <Service Security=True>
               <ServiceType>SampleServiceType2</ServiceType>
               <Action Mask=True>SampleAction1</Action>
             </Service>
           </ServiceList>
         </Device>
      </DeviceList>
    </Device>
   </root>
```

In above example, all UPnP contents (devices/services/actions) can be embedded in the pair of "<root> </root>" tags. In fact, with the inheritance ability of this hierarchical structure, only few necessary contents need to be present in this XML file.

In the exemplary XML configuration file, "Mask" flag indicates that the protected contents are not accessible/can't be seen by the control points ("Mask"="True") or can be accessed by the control points ("Mask"="False"). "Security" flag is used to indicate whether an authentication is needed to access the protected contents ("Security"="True") or not ("Security"="False"). These two flags can be combined in tags "<Device>", "<Service>" and "<Action>" as shown in the above XML file, and take effect in corresponding contents. They can be set together or individually.

In above hierarchical structure, "Mask" and "Security" flags at a layer will be inherited by the children elements at its immediately lower layer unless explicit reset of the flags at the lower layer. For the top layer of UPnP root device, if no specific value is set for a flag, then the default value of "False" will be applied to it. In one affected domain (maybe a UPnP device or a service), if there is no exception of the access control requirements of its any child element, then no further flags setting is needed besides at the top layer of this domain. That means all its children elements are not needed to be list in this structure. If a top layer element is flagged with "Mask=True", but there are some children elements under it with flag "Mask=False", then that top element should not be masked because it still has unmasked children elements. While, all its children elements (whether they are listed there) without explicitly "Mask=False" will be masked.

For tags "<Device>" and "<Service>", since there could be multiple instances of one type of devices or services, further tags can be extended to indicate the specific instances should be masked or secured, e.g. the tag <ExtendTag> shown below.

```
   ......
   <Device Mask=True Security=False>
   <DeviceType>SampleDeviceType1 </DeviceType>
   <ExtendTag>DeviceInstanceID</ExtendTag>
   </Device>
   ......
```

If "<ExtendTag>" is not present there, "Mask" and "Security" flags will be applied to all SampleDeviceType1 device instances. Here, "Mask" and "Security" flags are used only for DevicelnstancelD devices. As to the definition of "<ExtendTag>" and its implementation, it depends on the physical device's different designs and is up to the manufactory's further work.

Hereafter shows a second more detailed example of a Mask&Security access control configuration file in XML format applied for the UPnP IGD (InternetGatewayDevice) 10 in Fig.1:

```
  <root>
  <Device>
    <Device Type>InternetGatewayDevice</DeviceType>
    <ServiceList>
       <Service>
         <ServiceType>DeviceConfig</ServiceType>
         <Action Mask=True>Reboot</Action>
         <Action Mask=True>FactoryReset</Action>
       </Service>
       <Service Security=True>
         <ServiceType>LANConfigSecurity</ServiceType>
       </Service>
       <Service Mask=True>
         <ServiceType>Layer3Forwarding</ServiceType>
       </Service>
    </ServiceList>
    <DeviceList>
       <Device>
         <DeviceType>LAN Device</DeviceType>
         <ServiceList>
           <Service>
             <ServiceType>LAN EthernetInterfaceConfig</ServiceType>
               <Action Security=True>Getlnfo</Action>
           </Service>
           <Service Security=True>
             <ServiceType>WLANConfiguration</ServiceType>
               <Action Security=False>GetRadioMode</Action>
           </Service>
           <Service Mask=True>
             <ServiceType>LANHostConfigManagement</ServiceType>
           </Service>
         </ServiceList>
       </Device>
       <Device>
         <DeviceType>WANDevice</DeviceType>
         <ServiceList>
           <Service>
             <ServiceType>WANCommonlnterfaceConfig</ServiceType>
               <Action Mask=True>SetEnabledForlnternet</Action>
               <Action Mask=True>GetEnabledForlnternet</Action>
               <Action Mask=True>GetCommonLinkProperties</Action>
               <Action
  Mask=True>GetMaximumActiveConnections</Action>
           </Service>
           <Service Mask=True>
             <ServiceType>WANEthernetlnterfaceConfig</ServiceType>
           </Service>
           <Service>
             <ServiceType>WAN DSLDiagnostics</ServiceType>
               <Action Security=True>SetLoopDiagnosticsState</Action>
               <Action
  Security=True>GetLoopDiagnosticsResults</Action>
           </Service>
         </ServiceList>
         <DeviceList>
           <Device>
             <DeviceType>WANConnectionDevice</DeviceType>
             <ServiceList>
               <Service Mask=True>
                 <ServiceType>WANIPConnection</ServiceType>
               </Service>
               <Service Mask=True>
                 <ServiceType>WANDSLLinkConfig</ServiceType>
               </Service>
             </ServiceList>
           </Device>
         </DeviceList>
       </Device>
    </DeviceList>
  </Device>
  </root>
```

Definitions of above services and actions of InternetGatewayDevice are shown as below, and they can also be found in standards of "UPnP IGD" and "DSLF IGD (TR-064)".

### Definitions:

DeviceConfig service: Allows the handling of the configuration of the device.
- FactoryReset action: Restores the factory default settings on the IGD.
- Reboot action: Shuts the IGD down and then restarts it with the latest
   state variable values in place.
- Layer3Forwarding service: Allows the handling of the routing and forwarding
   configuration of the device.
- LANConfigSecurity service: Enables the ability to set the password that will
   allow the device to be configured via the xml interface.

### Definitions of services and actions of LANDevice:

A LANDevice models the attributes and functions of a LAN interface.
- LANEthenetlnterfaceConfig service: Models an Ethenet LAN connection on
   an IGD device. The service allows for the determination and modification of basic configuration information.
   - Getlnfo action: Retrieves all the state variables other than the statistics.
- WLANConfiguration service: Models an 802.11x LAN connection on a LAN
   device. This service allows for the determination and modification of basic configuration information.
   - GetRadioMode action: Gets the current radio mode.
- LANHostConfigManagement service: Enables reporting of LAN-related
   device information and setting and configuring LAN IP addressing.

### Definitions of services and actions of WANDevice:

A WANDevice models the attributes and functions of a WAN interface.
- WANCommonInterfaceConfig service: Models WAN interface properties common across all connection service instances
   - SetEnabledForlnternet action:
   - GetEnabledForlnternet action:
   - GetCommonLinkProperties action: Returns the values of the related
      state variables.
   - GetMaximumActiveConnections action: Returns the value of the
      MaximumActiveConnections state variable.
- WANEthernetInterfaceConfig service: Models physical layer properties
   specific to a single physical Ethernet WAN interface, and is exclusive of any other WANEthernetInterfaceConfig service within a given WANDevice.
- WANDSLDiagnostics service: Allows for the operation of an explicit DSL
   diagnostic test, and the ability to examine the results of the last such test.
- SetLoopDiagnosticsState action: Setting LoopDiagnostic-State to
   Requested Initiates Loop Diagnostics Data collection, which brings down the DSL connection while the test is operating. Values other than Requested are not allowed in this action.
- GetLoopDiagnosticsState action: Returns the current value of
   LoopDiagnosticsState.

### Definitions of Services and actions of WANConnectionDevice:

- WANIPConnection service: Enables a UPnP control point to configure and
   control IP connections on the WAN interface of an UPnP compliant IGD.
- WANEthernetLinkConfig service: Models the Ethernet link layer properties
   specific to a single physical Ethernet connection of a GW used for Internet access on an IGD.

From above second exemplary XML configuration file, it can be seen that the UPnP IGD 10 in Fig.1 offers DeviceConfig service with Reboot action and FactoryReset action, LANconfigSecurity service, and layer3 forwarding service. In addition, the UPnP IGD 10 hosts further virtual devices like LANDevice which is a virtual instantiation of a physical LAN interface, and WANDevice which is a virtual instantiation of a physical WAN interface. The LAN device provides LANEthernetInterfaceConfig service with a GetInfo action, WANConfiguration service with a GetRadioMode action, and LANHostConfigManagement service. The WAN device provides WANCommonInterfaceConfig service with SetEnabledForlnternet action, GetEnabledForlnternet action, GetCommonLinkProperties action and GetMaximumActiveConnections action; WANEthernetInterfaceConfig service; and WANDSLDiagnostics service with SetLoopDiagnosticsState action and GetLoopDiagnosticsResults action. In addition, the WAN Device further includes one or more instances of WANConnectionDevice corresponding to one or more active links on the WANDevice. In the example, WANConnectionDevice has WANIPConnection service and WANDSLLinkConfig service.

In the exemplary XML file, at the InterenetGatewayDevice layer, "Security" and "Mask" flags are set with a default value "False", which means, the InernetGatewayDevice can be freely accessed by the control points in the UPnP network. These two flags are then inherited by DeviceConfig service (which means that for a control point in the network, it is allowed of configuration of the UPnP IGD 10 via the UPnP DeviceConfig service), LANDevice, WANDevice, and WANConnectionDevice (Which means the UPnP IGD provides functions of LAN Devices, WAN Devices and WAN Connection Devices).

But for the LANConfigSecurity service, the "Mask" property value is inherited from the InternetGatewayDevice layer, which is "False", while the "Security" property value is enabled, "Security=True", with the result being that, for a control point in the network, it can see that the UPnP IGD provides the LANConfigSecurity Service, but if it accesses the service, authentication is needed. Regarding Layer3Forwarding service, since "Mask=True", the CPs in the network won't see this service.

Now take the DeviceConfig service with Reboot action and Factory action as another example to further describe the present inheritable XML security configuration structure. In this part, the Mask and Security values of DeviceConfig (both are "False") are inherited from the InternetGatewayDevice layer, and then the "Mask" flags are reset for both Reboot action and FactoryReset action so as to both Reboot action and FactoryReset action are masked and not shown to the CPs.

A further example is LANDevice with its children elements. Closely beneath the layer LANDevice, there are LANEthernetInterfaceConfig service, WLANConfiguration service, and LANHostConfigManagement service. They inherit the default access control values from LANDevice if they are not reset. So for LANEthernetInterfaceConfig service, both "Security" and "Mask" are configured with default value "False", which means this service is available to the CPs. However, the "Security" flag for WLANConfiguration service is reset to "True" to indicate that WLANConfiguration service can be accessed but authentication is needed. However, for the "Mask" flag of LANHostConfigManagement, it is reset to "True" to show that LANHostConfigManagement service is protected from the CPs.

Further for the GetInfo action closely underneath the LANEthernetInterfaceConfig layer, the value for the "Security" flag is reset to be "True" and the "Mask" flag is not reset here and inherits the value from LANEthernetInterfaceConfig layer, so that the GetInfo action can be seen by the CPs, but when a CP wants to trigger it, authentication is needed.

In the XML file, GetRafioMode is one action belongs to the WLANConfiguration service, therefore it should inherit the "Security" and "Mask" settings from the WLANConfiguration layer. So, the default value of "Security" GetRadioMode action should be "True". But when the user wants to let other control points freely access the GetRadioMode action, the "Security" flag is reset to be "False" again.

As another example, for WANDevice, it has WANCommonInterfaceConfig service, WANEthernetInterfaceConfig service, WANDSLDiagnostics service, and embedded WANConnectionDevice, in which the "Security" and "Mask" values of WANCommonInterfaceConfig service, WANDSLDiagnostics service and WANConnectionDevice are inherited from their upper layer WANDevice, "Mask" value is reset for WANEthernetInterfaceConfig. The "Mask" values for the SetEnabledForlnternet action, GetEnabledForlnternet action, GetCommonLinkProperties action, and GetMaximumActiveConnections action beneath the layer of WANCommonInterfaceConfig are reset to "True", and the "Security" values are got according to that of WANCommonInterfaceConfig, so above actions are disabled. The "Security" values for SetLoopDiagnosticsState action and GetLoopDiagnosticsResults action are set to "True" to show respectively that when a CP intends accessing the two actions, an authentication is needed respectively.

Underneath WANConnectionDevice layer, there are two services WANIPConnection and WANDSLLinkConfig with "Mask" being reset to "True" for them. In this condition, it is shown that these services are not shown to the CPs.

Present Mask and Security configuration file can be defined e.g. by the manufacturers independently according to their access control requirements and different implementations.

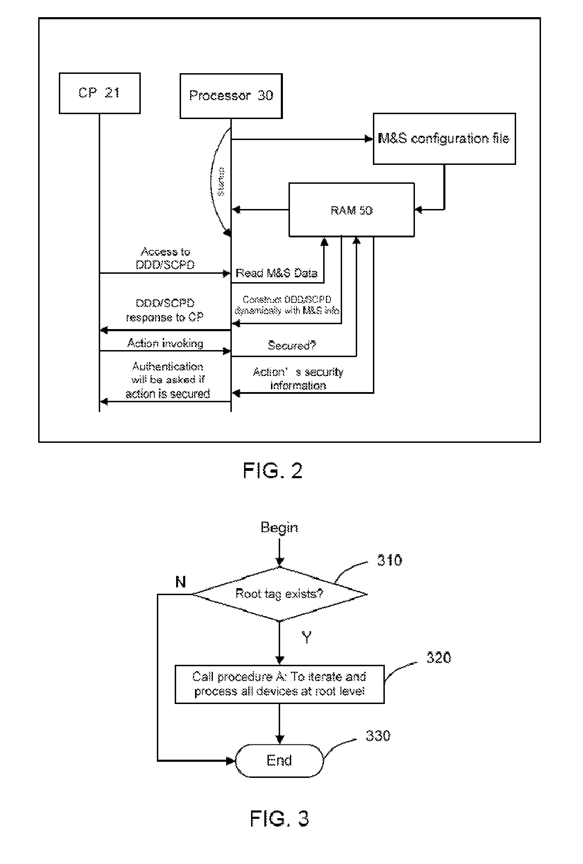

Fig.2 further illustrates how the current M&S configuration file is used when a CP intends to control a UPnP device. In Fig.2, though only CP 21 is shown to clarify the present principle, however, multiple CPs (CP21∼CP2L) are in the system.

When CP 21 intends to access the DDD/SCPD information provided by the UPnP IGD 10, the processor 30 in the UPnP IGD 10 reads the M&S configuration file from the storage 40 and stores it to the RAM 50 where the DDD/SCPD file is structured according to the M&S configuration file. Then the structured DDD/SCPD file is sent back to the CP 21.

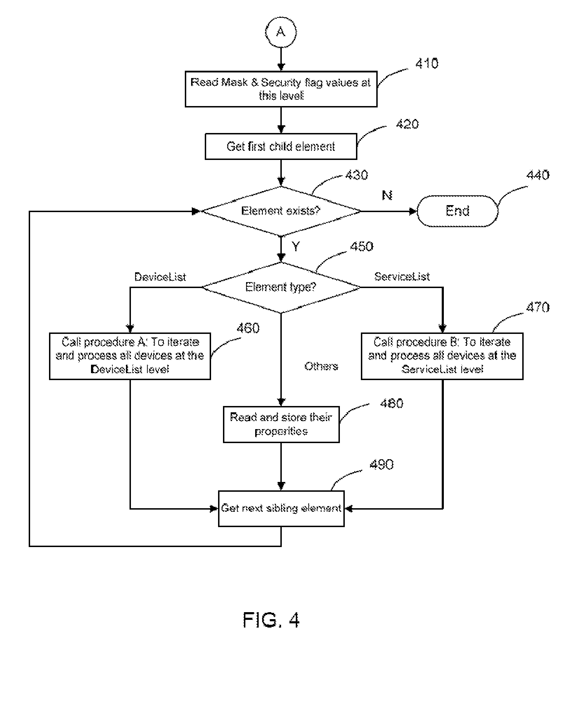

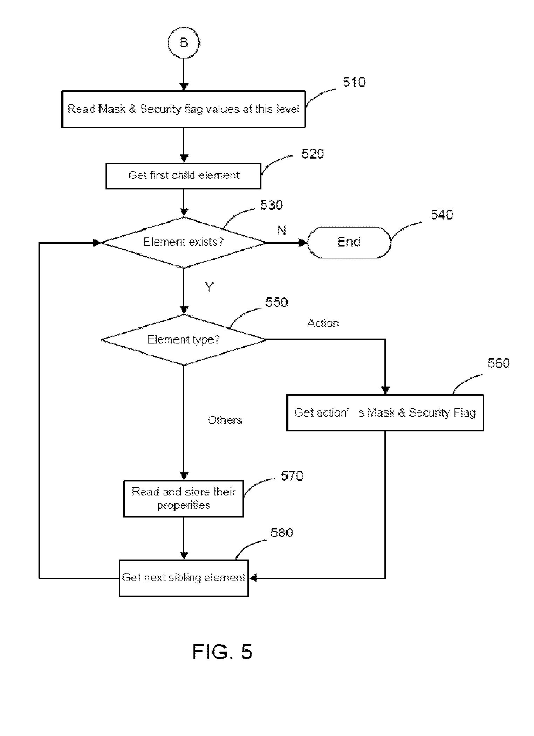

Figures 3, 4 and 5 are flow charts illustrating the process of parsing the M&S configuration file when the DDD/SCPD file is constructed. Fig.3 is a main procedure which starts with the determination of whether a "root" tag exists or not at step 310. If it exists, procedure A in Fig.4 is called to read "Mask" and "Security" flag values at this root layer, as shown in step 410. In above second exemplary XML configuration file, the root layer is the layer of InternetGatewayDevice. In Fig.4, step 420, it further tries to get the first child element under the root layer. And there is a determination in step 430 to see whether this child element exists or not. If the child element doesn't exist, the process goes to step 440 and ends, otherwise the process goes to step 450 to determine the type of the first element. If the determined type is device, then the process goes to step 460. If the type of the first element is service, the process proceeds to step 470. For other types, here they mainly refer to actions, the process flows to step 480. In the present second exemplary XML configuration file, the first child element of the root element is DeviceConfig service. After the type of the element is determined, i.e. the element is a service here, the process calls procedure B shown in Fig.5, where the "Mask" and "Security" flag values of the element, DeviceConfig service, are read at step 510. Since the two values are not reset (see the second exemplary XML file), they are inherited from the root layer, InternetGatewayDevice, i.e. "Mask=False", "Security=False". Then the process tries to get the first child element under the element DeviceConfig service at step 520. At step 530, it is determined whether the first child element of the DeviceConfig service exists or not. If there is no child element under the DeviceConfig service, the process goes to step 540 and ends. Otherwise the process goes to step 550 to determine the type of the first child element of the DeviceConfig service. When there are Reboot action and FactoryReset action being the children elements of the DeviceConfig services, firstly the process goes to the Reboot action and its Security and Mask values are read at step 560. Then the process goes to step 580 to get the next sibling element. Here the second element is FactoryReset action, and then processes 530, 550, and 560 are repeated. Security and Mask values of FactoryReset are read in sequence at step 560. Here for both the Reboot action and FactoryReset action, the "Mask" values are reset to "True" and the "Security" values will inherit those of their parent element "DeviceConfig", which being "False". Till now, the process has gone through the first child element of the root element. That is the procedure B is gone through and the process goes back to step 490 in Fig. 4. Sequentially, at step the process goes to the second child element of the root element at step 490 and the processes as stated for the first child element are repeated, which will not be elaborated here for concision.

During the constructing procedure of DDD/SCPD, device's UPnP elements will be compared to these data in the M&S configuration file in the RAM 50. The comparison will be done layer by layer. For those elements under the layer which is masked, they all will not be printed into DDD/SCPD except for those whose "Mask" value is reset explicitly. Then, those disallowed contents will not be in the DDD/SCPD and CP could not access them consequently.

In the process of action's invoking, security flag in the RAM 50 will be checked for the action. Each action has its properties including which upper device(s) and services (type, ID) it belongs to. This information will be compared in layer one by one to the access control data in the RAM 50 until no further tiny matched properties was found. And, the access control setting at the lowest matched layer will be returned for that action. If that action is secured, authentication will be asked then. As to the authentication mechanism, it's up to the manufactory to select and implement.

This invention uses a standalone "Mask" and "Security" configuration file to represent a device's UPnP access control requirements. With some modification in the UPnP implementation framework, access control function can be easily implemented based on this configuration. In addition, The "Mask" and "Security" configuration file's structure can be defined hierarchically based on the UPnP contents structure in the device, in which elements' access control properties are inheritable. And, this will give much more flexibility in designing an XML configuration file as to various access control requirements from different customers.

In above examples, though only "Mask" and "Security" attributes are described to describe the current principle, however, other attributes can be used too. In addition, though in above examples, the inheritable hierarchical configuration file is used to perform access control of the UpnP elements, the principle can be extended to other applications where an element shares attribute values with another element.

## Claims

1. An apparatus (10) having at least one first element (61∼6N) which is related to at least one second element(61∼6N, 71∼7M, 81∼8S) in a network, the apparatus comprising:
a first storage means (40) for storing a descriptor with a first value describing an attribute of the at least one first element, the descriptor with the first value being inherited by the relating at least one second element if there is not an explicitly resetted second value of the descriptor for the at least one second element, otherwise storing the explicitly resetted second value of the descriptor for the at least one second element, and
a processor (30) for providing the first and the second values of the descriptor respectively for the first element and the second element to a control device (21∼2L) so that the control device (21∼2L)accesses the apparatus (10) according to the first and the second values of the descriptor.

2. The apparatus (10) according to claim 1, wherein the descriptor and its corresponding first and second values for the first element and the second element are written and stored as an Extension Markup Language file in the first storage means.

3. The apparatus (10) according to claim 1 or 2, wherein the first element is the parent element of the second element.

4. The apparatus (10) according to claim 3, wherein the descriptor describes the access right of the at least one first element and second element by the control device.

5. The apparatus (10) according to claim 4, wherein the apparatus is a universal plug and play home gateway device.

6. The apparatus (10) according to claim 1, wherein there is a second storage (50) for storing the descriptor and its corresponding first and second values which are reconstructed to a Device Description Document before they are provided to the control device (21∼2L).

7. A method for parsing a configuration file, wherein the method comprising:
reading a first value of a descriptor for a first element ;
reading a second value of the descriptor for a second element, if the second value of the descriptor for the second element is written in the configuration file, otherwise, reading the first value of the descriptor as the value of the descriptor for the second element.

8. The method according to claim 7, wherein the configuration file is constructed as an Extension Markup Language file.

9. The method according to claim 8, wherein in the Extension Markup Language file, the first element is the parent element of the second element.

10. The method according to claim 7, wherein the first element is a UPnP device, and the second element is a UPnP device, service, or action it provides.

11. The method according to claim 7, wherein the descriptor describes the access right of the at least one first element and the second element.
